Europäisches Patentamt

European Patent Office

Office européen des brevets

(19)

(11) Numéro de publication: **0 251 870**
**A2**

(12) **DEMANDE DE BREVET EUROPEEN**

(21) Numéro de dépôt: 87401403.8

(22) Date de dépôt: 22.06.87

(51) Int. Cl.⁴: **G 02 C 1/08**

(30) Priorité: 20.06.86 FR 8608904

(43) Date de publication de la demande:
07.01.88 Bulletin 88/01

(84) Etats contractants désignés: **AT DE ES GB IT**

(71) Demandeur: **BOURGEOIS S.A.**
**Morbier**
**F-39400 Morez (FR)**

(72) Inventeur: **Gerbet, André**
**3 avenue Jean Jaurès**
**F-39300 Champagnole (FR)**

(74) Mandataire: **Petrovitch, Suzanne et al**
**Office Biétry R. &. G. Roger-Petit & R. Biétry 2, boulevard de Strasbourg**
**F-75010 Paris (FR)**

(54) **Dispositif pour la fermeture d'un cercle de lunette métallique.**

(57) Ce dispositif dénommé serre-cercle comprend un corps d'assemblage percé d'un passage sur toute sa hauteur, une douille taraudée sur toute sa longueur et destinée à être insérée dans ledit corps, et une vis (10) destinée à être vissée dans la douille en vue de fermer le cercle. Les deux passages (2a,2b), se faisant suite dans les deux pièces (1a,1b) résultant du sciage en deux parties du corps d'assemblage (1), ont une section transversale polygonale, la douille (7) taraudée a la même section transversale polygonale que ces passages sur toute la région de son pourtour extérieur, destinée à venir en contact avec ceux-ci, et elle a de préférence une longueur supérieure à la hauteur de la pièce (1a) par laquelle elle est introduite dans les passages (2a,2b) des pièces.

FIG. 6

EP 0 251 870 A2

## Description

Dispositif pour la fermeture d'un cercle de lunette métallique.

La présente invention a pour objet un dispositif perfectionné pour la fermeture d'un cercle de lunette. Ce dispositif est communément dénommé et sera appelé ci-après serre-cercle.

Les serre-cercle habituels sont constitués de deux pièces, rapportées sur les deux extrémités à assembler du cercle et percées en regard l'une de l'autre d'un trou taraudé, ainsi que d'une vis coopérant avec les trous taraudés pour rapprocher, appliquer et maintenir appliquées l'une contre l'autre les deux pièces en fermant ainsi le cercle.

Les deux pièces, qui forment le corps d'assemblage du serre-cercle, peuvent être initialement une pièce unique, qui est fixée contre les deux extrémités réunies du cercle et qui sera ultérieurement fendue dans le plan de jonction de ces deux extrémités. Ces pièces sont rapportées ou fixées par soudage ou brasage.

L'une au moins des deux pièces du corps d'assemblage du serre-cercle comporte généralement un tenon, qui est un élément habituellement courbé, supportant l'articulation de la branche de lunette et placé dans le prolongement de cette branche; le tenon peut faire partie intégrante de ladite pièce ou être un élément fixé par soudage ou brasage sur cette pièce. Le serre-cercle peut, toutefois, ne comporter aucun tenon, lorsqu'il est situé sur le cercle ailleurs qu'au point de montage de la branche, par exemple derrière le pont ou nez, qui est l'élément reliant les deux cercles d'une paire de lunettes.

On connaît également un serre-cercle avec ou sans tenon et dans lequel la liaison des deux pièces du corps d'assemblage est assurée non plus seulement par une vis, mais par une douille taraudée, qui traverse les deux pièces par des passages en vis-à-vis de dimensions correspondant aux dimensions extérieures de la douille, la vis étant destinée à être vissée dans la douille, après insertion de celle-ci dans lesdits passages, pour amener les deux pièces l'une contre l'autre. La douille est extérieurement cylindrique et cannelée à la partie inférieure de sa surface externe et les passages correspondants dans les deux pièces sont également cylindriques, l'un des deux passages devant être cannelé à une extrémité de façon complémentaire par rapport à la partie cannelée de la douille. Cette structure du serre-cercle est un perfectionnement, qui améliore l'alignement des deux parties du drageoir au voisinage de la fermeture du cercle et permet de remédier aux détériorations du taraudage et de la vis par un simple changement de l'ensemble douille-vis.

Dans un autre serre-cercle connu, la douille taraudée a la forme d'un parallélépipède droit, elle est fixée sur l'une des deux pièces, et elle est destinée à être engagée dans un passage de même forme foré en vis-à-vis dans l'autre pièce, avant de recevoir la vis. Cette structure, mieux encore que la précédente, améliore l'alignement des deux parties du drageoir, mais elle ne permet pas de remédier aux détériorations du taraudage.

La présente invention a pour but de perfectionner encore les serre-cercle connus. A cet effet, elle a pour objet un dispositif dénommé serre-cercle, pour la fermeture d'un cercle de lunette métallique, ce dispositif comprenant un corps d'assemblage monobloc percé d'un passage sur toute sa hauteur et destiné, après sa fixation, par une de ses faces non percées, sur le cercle, en regard des deux extrémités de celui-ci à réunir et après les opérations habituelles de mise en forme du cercle, à être scié en deux parties, qui seront les deux pièces du serre-cercle présentant deux passages se faisant suite, comprenant en outre une douille taraudée sur toute sa longueur et destinée à être insérée dans les passages des deux pièces après la mise en place du verre de lunette dans le cercle, et une vis destinée à être vissée dans la douille en vue de fermer le cercle, caractérisé en ce que les deux passages, se faisant suite dans les deux pièces après le sciage en deux parties du corps d'assemblage, ont une section transversale polygonale, en ce que ladite douille taraudée a la même section transversale polygonale que ces passages sur toute la région de son pourtour extérieur, destinée à venir en contact avec lesdits passages de section polygonale, et en ce qu'elle a des dimensions telles dans le sens transversal qu'elle pénètre à frottement doux dans les passages, de telle sorte que les faces de sa surface latérale soient en contact étroit avec les faces identiques desdits passages.

L'assemblage polygonal, ainsi réalisé, des deux pièces du corps par l'intermédiaire de la douille assure un alignement parfait des deux parties du drageoir, au voisinage de la fermeture du cercle, et évite de ce fait les risques d'écaillage ou de filage du verre. Par ailleurs, l'assemblage polygonal élimine les sollicitations dues aux manipulations de l'usager, qui, habituellement, sont transmises (par l'ensemble tenon-branche lorsqu'il existe) à la pièce d'assemblage sur laquelle est fixé (par soudage ou brasage) le tenon. Ces sollicitations sont, en général, un léger mouvement relatif entre les deux pièces, ceci étant la cause la plus fréquente d'un dévissage des vis d'assemblage; cette cause se trouve donc supprimée. D'autres avantages du dispositif sont le remplacement aisé de l'ensemble douille-vis, en cas d'endommagement du taraudage ou de la vis, alors qu'avec les dispositifs sans douille amovible, une réparation par les soins du détaillant est la plupart du temps impossible, et le fait que ce n'est plus la vis qui supporte les sollicitations mécaniques de la lunette en service et les efforts de guidage lors de l'opération de fermeture du cercle, mais une douille, dont la résistance est plus élevée que celle du noyau de la vis, celle-ci n'assurant plus qu'une fonction de serrage.

En outre, les éléments du dispositif peuvent être obtenus mécaniquement par un procédé simple, tel que le décolletage, leur prix de revient étant en conséquence abordable, alors que les dispositifs antérieurs à douille, décrits ci-dessus, étaient d'une fabrication onéreuse.

Avantageusement, la douille taraudée a une longueur inférieure à la hauteur des deux pièces superposées du corps d'assemblage, pour une question d'esthétique (c'est-à-dire pour ne pas déborder du corps), mais supérieure à la hauteur de la pièce par laquelle elle est introduite dans les passages des pièces. Cette caractéristique permet d'augmenter d'au moins 80% l'ouverture du dispositif, c'est-à-dire l'espace entre les deux pièces, sans séparer l'ensemble vis-douille, au moment du montage du verre dans le cercle, et cela pour un même encombrement du dispositif fermé; on dispose donc d'une plus grande ouverture pour la mise en place du verre, ce qui facilite cette opération et représente un gain de temps.

De préférence, la douille taraudée, qui joue le rôle d'un écrou, est pourvue, à son extrémité opposée à celle d'introduction dans les passages des pièces, d'une collerette saillant latéralement sur la douille, cette collerette étant destinée à arrêter le déplacement en translation de la douille dans les passages, et la vis est pourvue d'une tête destinée à arrêter son déplacement de sens opposé dans la douille; de préférence également, des logements sont formés dans les deux pièces pour recevoir ladite collerette de la douille et ladite tête de la vis, afin qu'elles ne débordent pas des pièces, ce qui réduit l'encombrement et améliore l'esthétique. Ces deux logements ont évidemment la forme et les dimensions de ladite collerette et de ladite tête.

La section polygonale des passages et de la douille peut être quelconque, par exemple carrée ou triangulaire; elle peut aussi résulter de cannelures formées longitudinalement sur toute la surface des passages et sur toute la surface externe de la douille.

Une forme particulière d'exécution du dispositif, appelé serre-cercle, suivant l'invention va être décrite ci-après, à titre d'exemple purement indicatif et nullement limitatif, en référence au dessin annexé sur lequel :

La figure 1 est une vue en coupe verticale du corps d'assemblage du dispositif, suivant la ligne I-I de la figure 2.

La figure 2 est une vue de dessus du corps d'assemblage.

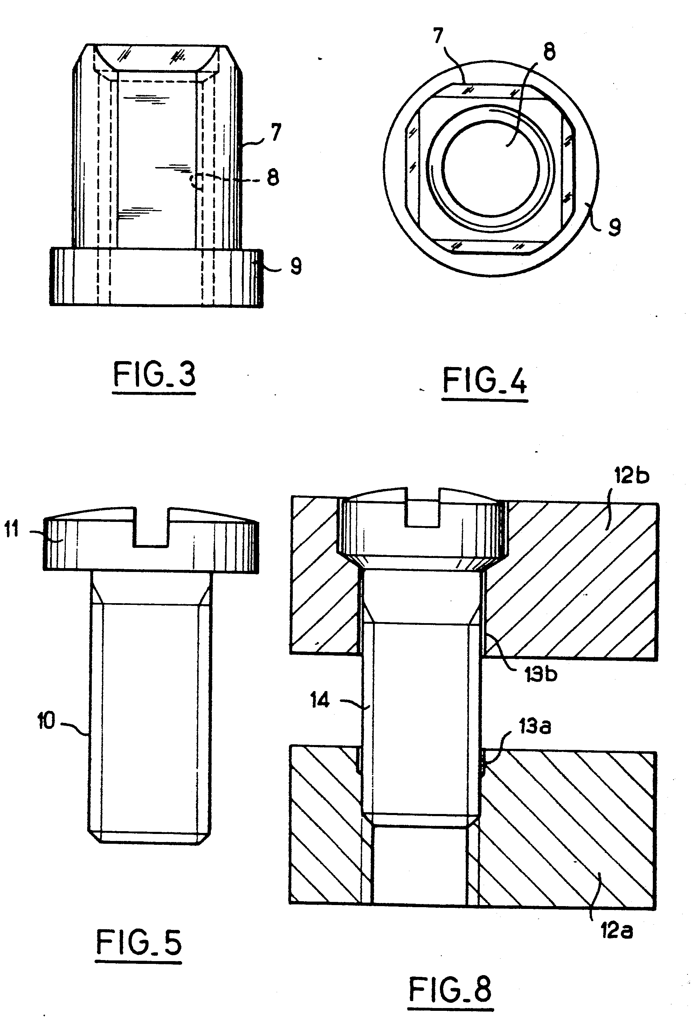

La figure 3 est un vue en élévation de la douille du dispositif.

La figure 4 est une vue en plan de cette douille.

La figure 5 est une vue en élévation de la vis du dispositif.

La figure 6 est une vue en coupe verticale par le même plan de coupe que pour la figure 1, mais après scission en deux pièces du corps d'assemblage et mise en place de la douille et de la vis dans les passages des pièces.

La figure 7 est une vue semblable à la figure 6, après la fermeture du dispositif.

La figure 8 est une vue en coupe verticale, par un plan de symétrie longitudinal des passages percés dans les deux pièces de son corps, d'un serre-cercle antérieur dépourvu de douille, la vis ayant été introduite dans les passages.

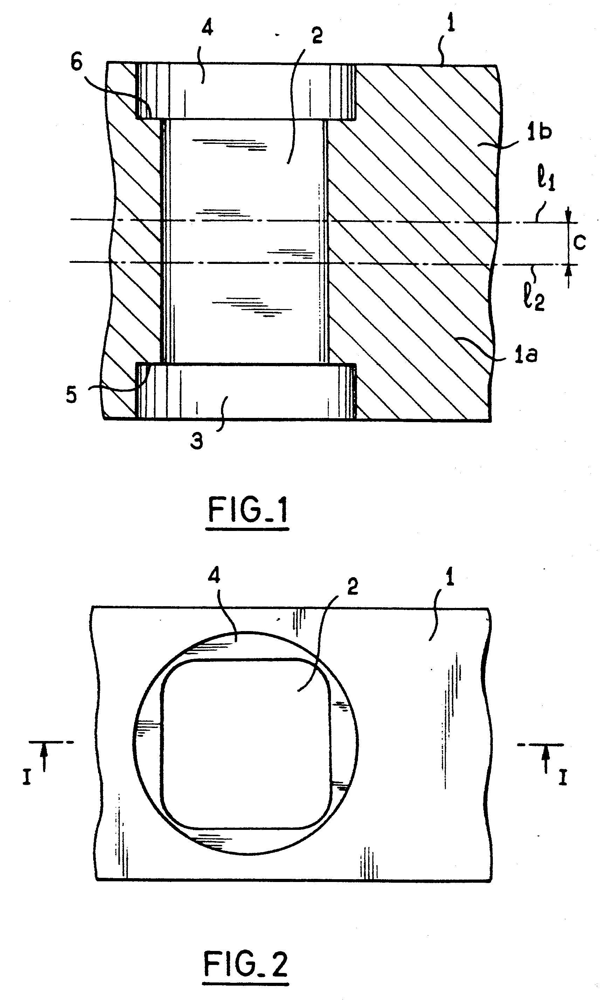

Sur le dessin, le corps d'assemblage 1, destiné à être scindé en deux pièces 1a et 1b par sciage dans une zone d'épaisseur c, délimitée à la figure 1 par les lignes en traits discontinus $1_1$ et $1_2$, n'est représenté que partiellement. Ce corps d'assemblage monobloc 1, qui peut avoir diverses formes (être par exemple de section carrée, triangulaire, polygonale en général) et qui peut présenter des cannelures sur sa surface latérale, est destiné à être assemblé par l'une de ses faces verticales à un profilé de lunette métallique, dans la région des deux extrémités à réunir de ce profilé; l'assemblage est réalisé par soudage, soudo-brasage ou brasage, après préparation adéquate (par exemple par fraisage) de la face d'assemblage dudit corps, consistant à lui donner une forme complémentaire de celle dudit profilé dans la zone de jonction. Le profilé n'est pas représenté.

Ce profilé constitue un cercle de forme quelconque fermé par le corps d'assemblage 1, lorsque la jonction a été effectuée.

Dans cet état, le cercle peut subir les opérations subséquentes habituelles de mise en forme, en particulier un ménisquage (c'est-à-dire un galbage à la forme du verre sphérique qu'il devra recevoir).

Suivant la présente invention, ledit corps d'assemblage monobloc 1 est percé sur toute sa hauteur d'un passage 2 de section transversale polygonale (carrée dans le cas particulier représenté au dessin). Ce passage est élargi à ses deux extrémités 3 et 4, où il prend une forme cylindrique, au-delà d'épaulements, 5 et 6 respectivement.

Au cours des opérations d'usinage de la monture de la paire de lunettes, le corps d'assemblage 1 sera scié en les deux pièces 1a et 1b ( qui seront, suivant les besoins, d'égale épaisseur ou de deux épaisseurs différentes); le passage 2 se trouvera alors également scindé en deux passages, un passage 2a dans la pièce 1a et un passage 2b dans la pièce 1b. Le sciage du corps d'assemblage, initialement fixé sur le cercle (non représenté) de façon à recouvrir et à maintenir assemblées les deux extrémités libres et préalablement réunies de celui-ci, permet maintenant l'ouverture du cercle, afin de mettre en place dans le drageoir de celui-ci le verre de lunette préalablement taillé à la forme convenable.

Le corps d'assemblage 1 peut comporter, sur son extrémité opposée à celle liée au cercle et sur l'une ou l'autre des pièces 1a et 1b, un tenon sur lequel sera articulée la branche de la lunette.

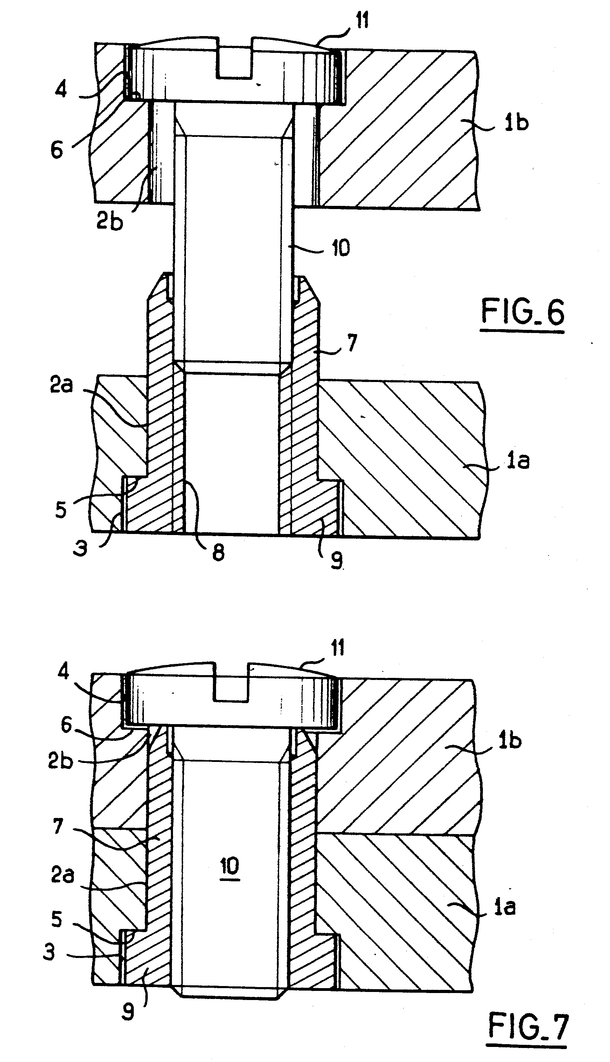

La fermeture du cercle, après le montage du verre, s'obtient, suivant l'invention, au moyen d'une douille 7 taraudée, de même section transversale polygonale que les passages 2a et 2b et de dimensions telles dans le sens transversal qu'elle puisse pénétrer à frottement doux dans ces passages, avec les faces de sa surface latérale prismatique en contact étroit avec les faces identiques desdits passages. La douille 7, qui jouera le rôle d'un écrou, présente sur toute sa longueur un trou 8 taraudé et elle comporte à une extrémité une collerette 9 de section circulaire, qui prendra place dans le logement 3 du passage 2a de la pièce 1a et dont l'épaulement viendra buter contre l'épaulement 5 du passage 2a. Une vis 10 coopère avec la douille 7 pour la fermeture du cercle. Cette vis est munie d'une tête rainurée 11 de plus grand diamètre que la tige de la vis et qui est destinée à prendre place dans le logement 4 de la pièce 1b et à venir buter sur l'épaulement 6 du passage 2b, ou mieux sur l'extrémité de la douille 7 (voir figure 7).

Les figures 6 et 7 illustrent l'opération de fermeture du cercle, dont les deux extrémités libres sont liées respectivement aux pièces 1a et 1b du corps d'assemblage (le cercle n'a pas été représenté sur les figures). La douille 7 est insérée dans la pièce 1a, puis la vis 10 est engagée dans la pièce 1b et vissée dans la douille-écrou 7, jusqu'à ce que les pièces 1a et 1b soient appliquées l'une contre l'autre (figure 7). On voit sur cette figure que la vis doit avoir une longueur suffisante pour traverser de part en part la douille et on voit, sur les figures 6 et 7, que cette douille 7 a une longueur inférieure à la hauteur des pièces 1a et 1b superposées, mais supérieure à la hauteur de la pièce 1a par laquelle elle est introduite dans le corps d'assemblage; elle prolonge ainsi le passage 2a et permet d'accroître l'ouverture du dispositif, c'est-à-dire l'espacement entre les deux pièces 1a et 1b, la vis 10 restant engagée dans la douille; cette augmentation de l'ouverture facilite le changement du verre, sans qu'il soit nécessaire de séparer du dispositif et d'y remettre en place l'ensemble douille-vis. Cet avantage est évident lorsqu'on compare au serre-cercle suivant l'invention, montré à la figure 6, un serre-cercle antérieur dépourvu de douille, montré à la figure 8. Dans ce serre-cercle connu, les deux pièces 12a et 12b du corps d'assemblage sont percées de passages cylindriques filetés 13a et 13b, dans lesquels est directement vissée une vis 14.

Malgré l'ouverture plus grande permise par le serre-cercle suivant l'invention, l'encombrement du dispositif fermé est le même qu'avec le serre-cercle antérieur suivant la figure 8.

L'ouverture possible avec le présent serre-cercle est maximale lorsque la douille 7 a, comme montré à la figure 7, une longueur telle qu'en fin de serrage de la vis 10 la tête 11 de celle-ci soit appliquée sur l'extrémité de la douille, un jeu de quelques centièmes de millimètre étant alors laissé entre le bas de la tête 11 et l'épaulement 6 du passage 2b. Cette réalisation permet d'appliquer l'effort de serrage sur l'extrémité de la douille tout en augmentant la possibilité d'ouverture du cercle.

Des modifications de détail du domaine des équivalents techniques peuvent être apportées au serre-cercle décrit ci-dessus, sans que l'on sorte pour cela du domaine de la présente invention.

## Revendications

1.- Dispositif dénommé serre-cercle, pour la fermeture d'un cercle de lunette métallique, ce dispositif comprenant un corps d'assemblage monobloc percé d'un passage sur toute sa hauteur et destiné, après sa fixation, par une de ses faces non percées, sur le cercle, en regard des deux extrémités de celui-ci à réunir et après les opérations habituelles de mise en forme du cercle, à être scié en deux parties, qui seront les deux pièces du serre-cercle présentant deux passages se faisant suite, comprenant en outre une douille taraudée sur toute sa longueur et destinée à être insérée dans les passages des deux pièces après la mise en place du verre de lunette dans le cercle, et une vis (10) destinée à être vissée dans la douille en vue de fermer le cercle, caractérisé en ce que les deux passages (2a,2b), se faisant suite dans les deux pièces (1a, 1b) après le sciage en deux parties du corps d'assemblage (1), ont une section transversale polygonale, en ce que ladite douille (7) taraudée a la même section transversale polygonale que ces passages sur toute la région de son pourtour extérieur, destinée à venir en contact avec lesdits passages (2a,2b) de section polygonale, et en ce qu'elle a des dimensions telles dans le sens transversal qu'elle pénètre à frottement doux dans les passages, de telle sorte que les faces de sa surface latérale soient en contact étroit avec les faces identiques desdits passages.

2.- Dispositif suivant la revendication 1, caractérisé en ce que la douille (7) taraudée a une longueur inférieure à la hauteur des deux pièces (1a,1b) superposées du corps d'assemblage, mais supérieure à la hauteur de la pièce (1a) par laquelle elle est introduite dans les passages (2a,2b) des pièces.

3.- Dispositif suivant la revendication 1 ou 2, caractérisé en ce que la douille (7) taraudée, qui joue le rôle d'un écrou, est pourvue, à son extrémité opposée à celle d'introduction dans les passages (2a,2b) des pièces, d'une collerette (9) saillant latéralement sur la douille, cette collerette étant destinée à arrêter le déplacement en translation de la douille dans les passages, et la vis (10) est pourvue d'une tête (11) destinée à arrêter son déplacement de sens opposé dans la douille.

4.- Dispositif suivant la revendication 3, caractérisé en ce que des logements (3,4) sont formés dans les deux pièces (1a,1b) pour recevoir ladite collerette (9) de la douille (7) et ladite tête (11) de la vis (10).

5.- Dispositif suivant l'une quelconque des revendications 1 à 4, caractérisé en ce que la section polygonale des passages (2a,2b) et de la douille (7) est carrée ou triangulaire, ou résulte de cannelures formées longitudinalement sur toute la surface des passages et sur toute la surface externe de la douille.

6.- Dispositif suivant l'une quelconque des revendications 3 à 5, caractérisé en ce que la douille (7) a une longueur telle qu'en fin de serrage de la vis (10) la tête (11) de celle-ci soit appliquée sur l'extrémité de la douille, un jeu de quelques centièmes de millimètre étant alors laissé entre le bas de la tête (11) et l'épaulement (6) du passage (2b).

0251870

FIG.1

FIG.2

0251870

FIG. 3

FIG. 4

FIG. 5

FIG. 8

0251870

FIG.6

FIG.7